# EUROPEAN PATENT APPLICATION

(11) **EP 0 767 039 A1**
(43) Date of publication of application: **09.04.1997**
(21) Application number: 96306724.4
(22) Date of filing: 17.09.1996
(51) Int. Cl.: B29C 45/02

(54) **Plunger used for injection molding apparatus**

(30) Priority: 18.09.1995 JP 238589/95
(71) Applicant: NGK INSULATORS, LTD., Nagoya City Aichi Pref. (JP)
(72) Inventor: Kashigawa, Hiroshi, Nagoya City, Aichi Pref. (JP); Hasegawa, Yasuo, Shimokobari, Komaki City, Aichi Pref. (JP)
(74) Representative: Paget, Hugh Charles Edward

(57) **Abstract**

A plunger (1) used for an injection molding apparatus having a construction such that a molding material to be injected is supplied into a chamber (3) and the thus supplied molding material is pushed out from a nozzle (5) is disclosed. In the plunger, there is a buffer portion (10) for relieving friction between the inner surface of the chamber and the outer surface of the plunger, which is arranged on an outer surface of a tip portion of the plunger. Alternatively a planar tip surface of the plunger is arranged perpendicularly to a direction of a center axis of the plunger. The features of the buffer portion and the planar tip surface may be combined.

## Description

### Background of the Invention

### (1) Field of the Invention

The present invention relates to a plunger used for an injection molding apparatus having a construction such that a molding material to be injected is supplied into a chamber and the thus supplied molding material is pushed out from a nozzle or die by means of the plunger.

### (2) Related Art Statement

Usually, various types of injection molding apparatuses, in which a molding material to be injected is supplied into a chamber and the thus supplied molding material is pushed out from a nozzle by means of the plunger, have been known.

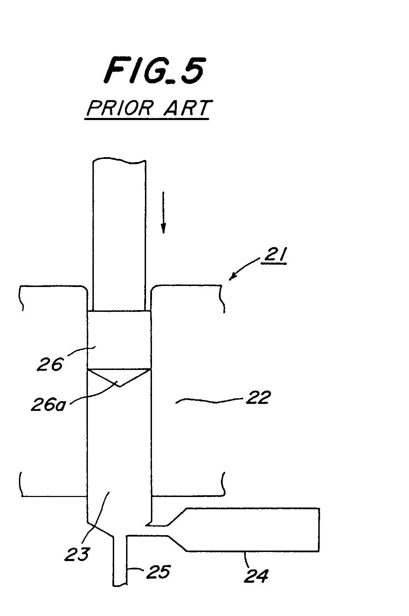

Fig. 5 is a schematic view showing one embodiment of the known injection molding apparatus. In the embodiment mentioned above, an injection molding apparatus comprises a chamber 22, a plasticizing apparatus 24 for supplying a polymer 23 into the chamber 22, and a plunger 26 for pushing the polymer 23 in the chamber 22 from a nozzle 25 to a die etc. not shown. In the known injection molding apparatus 21 shown in Fig. 5, the polymer 23 is discharged from the nozzle 25 by supplying the polymer 23 from the plasticizing apparatus 24 into the chamber 22 and by inserting the plunger 26 into the chamber 22.

In the known injection molding apparatus mentioned above, in order to make an injection capacity of the chamber 22 larger, it is necessary to increase a bore diameter i.e. a diameter of the chamber 22 or to increase a length of the chamber 22. However, if the bore diameter is made larger, an injection pressure is decreased, and there is a case that a problem occurs during an actual use. Moreover, if a length of the chamber 22 is made larger, it is necessary to use the plunger 26 having a long length. In the injection molding apparatus 21 using the long plunger 26 mentioned above, it is difficult to make identical a center axis of the chamber 22 with that of the plunger 26. Therefore, a variation of the center axes thereof is liable to occur. In this case, a contact or a friction during an injection operation between an inner surface of the chamber 22 and an outer surface of the plunger 26 becomes hard. In an extreme case, a tear portion is generated in one of the inner surface of the chamber 22 and the outer surface of the plunger 26 or a fused connection portion is generated between the inner surface of the chamber 22 and the outer surface of the plunger 26.

Moreover, in the injection molding apparatus 21 mentioned above, when the polymer 23 is supplied from the plasticizing apparatus 24 into the chamber 22, the polymer 23 is brought into contact with a cone portion 26a at a tip of the plunger 26. In this case, the plunger 26 leans to a direction opposed to a supplying direction of the polymer 23. Therefore, as is the same as the embodiment mentioned above, the contact or the friction during the injection operation between the inner surface of the chamber 22 and the outer surface of the plunger 26 becomes harder. Also in an extreme case, the tear portion or the fused connection portion is generated at a contact surface between the chamber 22 and the plunger 26.

Further, if the tear portion and the fused connection portion are generated as mentioned above, an injection speed of the polymer 23 is varied due to the thus generated tear portion and fused connection portion. In this case, an accurate injection molding operation is not performed, or the injection molding apparatus 21 is stopped, thereby stopping a manufacturing line. In order to eliminate the drawbacks mentioned above, there is the following idea. At first, an undesired movement of the plunger 26 in the chamber 22 is reduced as small as possible by making a straight portion of the tip of the plunger 26 longer. Next, the plunger 26 is designed to follow the chamber 22, by admitting a little movement when the plunger 26 is connected to a hydraulic cylinder not shown for driving the plunger 26. However, even in the ideas mentioned above, it is not possible to prevent the tear portion and the fused connection portion mentioned above, and thus they can not be a basic solving means for this purpose.

### Summary of the Invention

It is an object of the invention to eliminate the drawbacks mentioned above and to provide a plunger used for an injection molding apparatus in which a tear portion and a fused connection portion at a contact surface between a chamber and a plunger can be reduced and an accurate injection molding operation can be performed.

According to a first aspect of the invention, a plunger used for an injection molding apparatus having a construction such that a molding material to be injected is supplied into a chamber and the thus supplied molding material is pushed out from a nozzle by means of the plunger, comprises a buffer portion for relieving a friction between an inner surface of the chamber and an outer surface of the plunger, which is arranged on an outer surface of a tip portion of the plunger.

According to a second aspect of the invention, a plunger used for an injection molding apparatus having a construction such that a molding material to be injected is supplied into a chamber and the thus supplied molding material is pushed out from a nozzle by means of the plunger, comprises a planar tip surface of the plunger which is arranged perpendicularly to a direction of a center axis of the plunger.

According to a third aspect of the invention, a plunger used for an injection molding apparatus having a construction such that a molding material to be injected is supplied into a chamber and the thus supplied molding material is pushed out from a nozzle by means of the plunger, comprises a buffer portion for relieving a friction between an inner surface of the chamber and an outer surface of the plunger, which is arranged on an outer surface of a tip portion of the plunger, and a planar tip surface of the plunger which is arranged perpendicularly to a direction of a center axis of the plunger.

In the first aspect of the invention, the buffer portion arranged on the outer surface of the tip portion of the chamber can relieve the friction between the inner surface of the chamber and the outer surface of the plunger. As a result, it is possible to prevent a generation of a tear portion or a fused connection portion at the contact surface between the chamber and the plunger during the injection molding operation. That is to say, if a recess portion is used as the buffer portion, a molding material such as polymer is inserted into the recess portion during the injection molding operation and the thus inserted material functions to be a cushion member. Moreover, if a ring member is used as the buffer portion, the ring member itself functions to be a cushion member.

In the second aspect of the invention, since use is made of the planar tip portion of the plunger which is arranged perpendicularly to a direction of the center axis of the plunger, it is possible to reduce the effect of the force of a material supplying at the tip portion of the plunger when the molding material such as polymer is supplied into the chamber. Therefore, it is possible to maintain an accurate positional relation between the plunger and the chamber. In addition, it is possible to prevent a generation of the tear portion and the fused connection portion at the contact surface between the chamber and the plunger during the injection molding operation.

In the third aspect of the invention, since use is made of the buffer portion disclosed in the above first aspect and the plane tip portion of the plunger disclosed in the above second aspect, it is possible to further prevent a generation of the tear portion and the fused connection portion at the contact surface between the chamber and the plunger during the injection molding operation.

### Brief Description of the Drawinqs

Fig. 1 is a schematic view showing one embodiment of a plunger used for an injection molding apparatus according to a first aspect of the invention;
Fig. 2 is a schematic view illustrating one embodiment of a buffer portion of the plunger used for the injection molding apparatus according to the first aspect of the invention;
Fig. 3 is a schematic view depicting another embodiment of the buffer portion of the plunger used for the injection molding apparatus according to the first aspect of the invention;
Fig. 4 is a schematic view showing one embodiment of a tip portion of a plunger used for an injection molding apparatus according to a second aspect of the invention; and
Fig. 5 is a schematic view illustrating one embodiment of a plunger used for a known injection molding apparatus.

### Description of the Preferred Embodiments

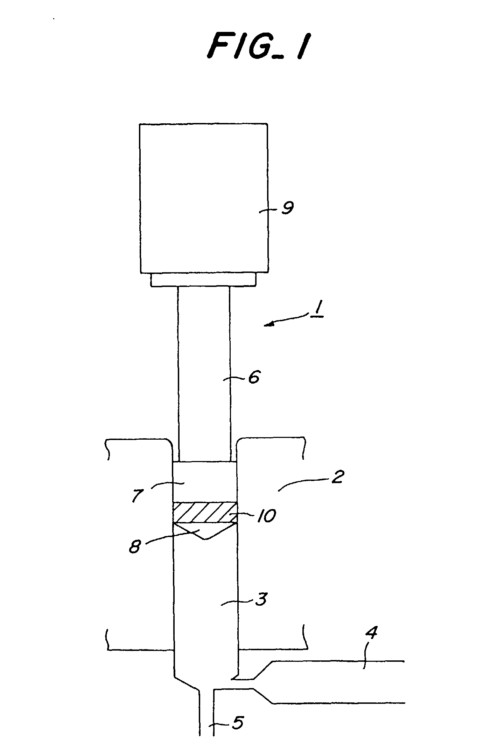

Fig. 1 is a schematic view showing one embodiment of a plunger used for an injection molding apparatus according to a first aspect of the invention. In Fig. 1, an injection molding apparatus 1 according to a first aspect of the invention comprises a chamber 2, a plasticizing apparatus 4 for supplying a polymer 3 to be injected as a forming material into the chamber 2, and a plunger 6 for pushing the polymer 3 accommodated in the chamber 2 through a nozzle 5 to a die etc. not shown. Moreover, a tip portion of the plunger 6 comprises a straight portion 7 having an outer diameter a little smaller than an inner diameter of the chamber 2, and a cone portion 8 arranged at a tip of the straight portion 7. In this embodiment, a step portion is arranged between a main body of the plunger 6 and the straight portion 7. Only the straight portion 7 is brought into contact with an inner surface of the chamber 2. Further, a hydraulic cylinder 9 for driving the plunger 6 is arranged at an opposed end of the plunger 6 with respect to the straight portion 7.

In the first aspect of the invention, it is important to arrange a buffer portion for relieving a friction between an inner surface of the chamber 2 and an outer surface of the plunger 6 at a tip outer portion of the plunger 6 i.e. all the tip outer portion of the straight portion 7. In the injection molding apparatus having a construction shown in Fig. 1, the polymer 3 is supplied from the plasticizing apparatus 4 to the chamber 2, and the plunger 6 is inserted into the chamber 2, so that the supplied polymer 3 is discharged from the nozzle 5.

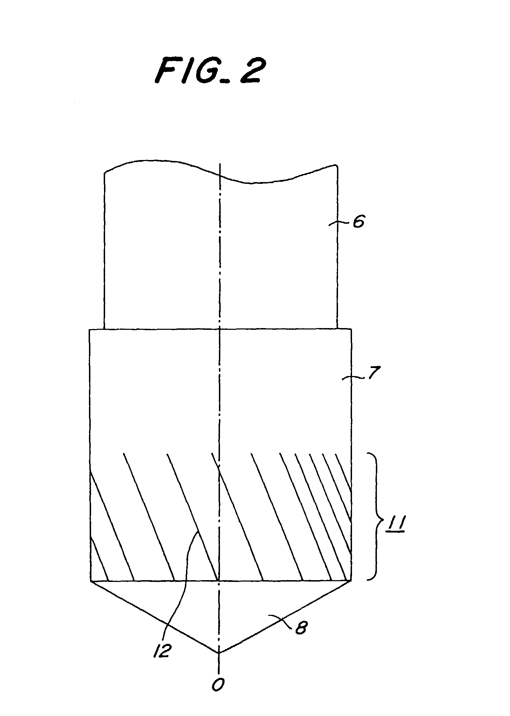

Fig. 2 is a schematic view showing one embodiment of the buffer portion 10 of the plunger used for the injection molding apparatus according to the first aspect of the invention. In the embodiment shown in Fig. 2, the buffer portion 10 is constructed by a recess portion 11. The recess portion 11 is constructed by a plurality of parallel recesses 12 each having a predetermined inclination with respect to a center axis O of the plunger 6. In this embodiment, the recess portion 11 is arranged from an end of the straight portion 7 in a side of the cone portion 8 to a substantially half position of the straight portion 7. As for a field on the surface of the straight portion 7 to which the recess portion 11 can be arranged, it is not limited to the half position of the straight portion 7. However, if the recess portion 11 is arranged on all the surface of the straight portion 7, the polymer 3 in the chamber 2 is introduced to the plunger 6 through the parallel recesses 12. On the other hand, if the recess portion 11 is arranged at a small field on a surface of the straight portion 7, a function of the recess portion 11 is not preferably achieved. Therefore, it is necessary to determine the field of arranging the recess portion 11 on the surface of the straight portion 7 corresponding to respective conditions. Moreover, the parallel recesses 12 are arranged in such a manner that one parallel recess is always overlapped with the adjacent parallel recesses when viewed from a direction of the center axis O of the plunger 6. Further, each parallel recess 12 has a triangle cross section, and a depth of the parallel recess 12 is set to 2 mm.

As shown in Fig. 2, in the case of forming the recess portion 11 as the buffer portion 10, since the polymer 3 is introduced into the parallel recesses 12 from the end portion of the parallel recesses 12 in the cone portion 8 side during the injection molding operation, the thus introduced polymer 3 functions to relieve the contact and the friction between the inner surface of the chamber 2 and the outer surface of the plunger 6. As a result, an excess friction is not generated between the chamber 2 and the plunger 6, and a tear portion and a fused connection portion is not generated at the contact surface between the chamber 2 and the plunger 6, so that the plunger 6 can be moved smoothly. Particularly, this feature is more preferable in the case that use is made of two chambers in the injection molding apparatus and it is necessary to make uniform operations of the two chambers.

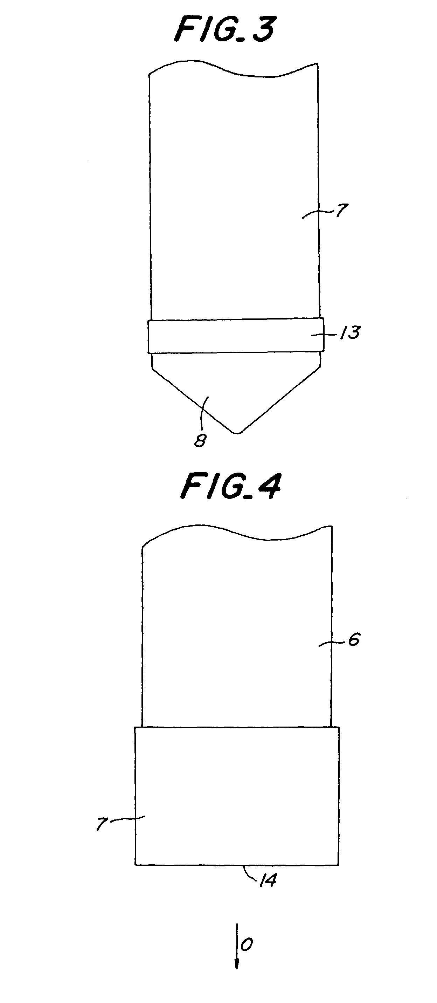

Fig. 3 is a schematic view showing another embodiment of the buffer portion 10 of the plunger used for the injection molding apparatus according to the first aspect of the invention. In the embodiment shown in Fig. 3, the buffer portion 10 is constructed by a ring member 13. The ring member 13 is made of a material such as resins or the like, and the ring member 13 is arranged on an overall surface of a tip of the straight portion 7 in the cone portion 8 side. A thickness of the ring member 13 is not limited particularly, but it is preferred to set the thickness of the ring member 13 in such a manner that a little portion is projected from the straight portion 7. As is the same as the recess portion 11 mentioned above, the ring member 13 functions to relieve the contact or the friction between the inner surface of the plunger 2 and the outer surface of the plunger 6.

Fig. 4 is a schematic view showing one embodiment of a tip portion of the plunger used for the injection molding apparatus according to a second aspect of the invention. In the plunger according to the second aspect of the invention shown in Fig. 4, the cone portion 8 is not arranged at the tip of the straight portion 7 of the plunger 6. It is different from the first aspect of the invention. That is to say, a tip of the straight portion 7 is constructed by a plane 14 which is perpendicular to the center axis O of the plunger 6. In the embodiment shown in Fig. 4, the polymer 3, which is supplied from the plasticizing apparatus 4 into the chamber 2, is brought into contact with the plane 14 of the straight portion 7 uniformly. As a result, the plunger 6 is not inclined during the injection operation of the polymer 3. Therefore, as is the same as the first aspect of the invention, an excess friction is not generated between the chamber 2 and the plunger 6, and the tear portion and the fused connection portion is not generated at the contact surface between the chamber 2 and the plunger 6, so that the plunger 6 can be moved smoothly. Also in the second aspect of the invention, this feature is more preferable in the case that use is made of two chambers in the injection molding apparatus.

Both of the plunger according to the first aspect of the invention in which use is made of the recess portion 11 or the ring member 13 as the buffer portion 10 and the plunger according to the second aspect of the invention in which the tip of the straight portion 7 is constructed by the plain 14 can solely function to make the movement of the plunger 6 smooth. However, as the case may be, it is possible to combine the feature of the first aspect of the invention and the feature of the second aspect of the invention to form a third aspect of the invention. The constructions according to the third aspect of the invention are shown previously as Figs. 1 to 4, and thus it is not shown here. In this case, it is a matter of course that the third aspect of the invent-ion functions to make the movement of the plunger 6 more smoothly than the first aspect of the invention or the second aspect of the invention only.

The present invention in not limited by the embodiments mentioned above, and various modifications are possible. For example, in the embodiment mentioned above, use is made of the polymer as a material to be injected by the injection molding apparatus, but the polymer is one example, and thus the other materials, which can be injected by the injection molding apparatus, can be preferably applied to the invention. Moreover, the constriction of the injection molding apparatus is shown in Fig. 1, but the injection molding apparatus shown in Fig. 1 is one example. If use is made of the plunger, the injection molding apparatus other than that of Fig. 1 can be preferably applied to the invention. Particularly, in the embodiments mentioned above, use is made of the injection molding apparatus in which the nozzle is arranged at the outlet of the chamber, but it is possible to use the injection molding apparatus in which the die is arranged at the outlet of the chamber.

As clearly understood from the above explanations, according to the invention, since the friction between the inner surface of the chamber and the outer surface of the plunger can be relieved by the buffer portion arranged at the tip outer portion of the plunger in the first aspect of the invention, since the inclination of the plunger during the polymer injection operation can be eliminated by the plain tip portion of the plunger in the second aspect of the invention, or since both features according to the first aspect of the invention and the second aspect of the invention can be achieved by the third aspect of the invention, it is possible to prevent the generations of the tear portion and the fused connection portion at the contact surface between the chamber and the plunger during the polymer injection operation. As a result, a variation of the injection speed can be eliminated.

## Claims

1. A plunger for an injection molding apparatus having a construction such that a molding material to be injected is supplied into a chamber and the thus supplied molding material is pushed out from the chamber by means of the plunger, comprising a buffer portion for relieving friction between an inner surface of the chamber and an outer surface of the plunger, which is arranged on an outer surface of a tip portion of the plunger.

2. The plunger for an injection molding apparatus according to claim 1, wherein said buffer portion is composed of a recess portion in which a plurality of parallel recesses each having a predetermined angle with respect to a center axis of the plunger are arranged.

3. The plunger for an injection molding apparatus according to claim 2, wherein positions of adjacent parallel recesses are overlapped if viewed in a direction of the center axis of the plunger.

4. The plunger for an injection molding apparatus according to claim 2 or 3, wherein each recess has a triangle cross section.

5. The plunger for an injection molding apparatus according to claim 1, wherein said buffer portion is composed of a ring member.

6. The plunger for an injection molding apparatus according to claim 5, wherein said ring member is made of a resin.

7. A plunger for an injection molding apparatus having a construction such that a molding material to be injected is supplied into a chamber and the thus supplied molding material is pushed out from the chamber by means of the plunger, comprising a planar tip portion of the plunger which is arranged perpendicularly to a direction of a center axis of the plunger.

8. A plunger for an injection molding apparatus having a construction such that a molding material to be injected is supplied into a chamber and the thus supplied molding material is pushed out from the chamber by means of the plunger, comprising a buffer portion for relieving a friction between an inner surface of the chamber and an outer surface of the plunger, which is arranged on an outer surface of a tip portion of the plunger, and a planar tip portion of the plunger which is arranged perpendicularly to a direction of a center axis of the plunger.

9. The plunger for an injection molding apparatus according to claim 8, wherein said buffer portion is composed of a recess portion or a ring member.

10. An injection molding apparatus having a plunger according to any one of claims 1 to 9.
